# EUROPÄISCHE PATENTSCHRIFT

(11) **EP 1 564 639 B1**
(45) Veröffentlichungstag und Bekanntmachung des Hinweises auf die Patenterteilung: **23.07.2008**
(21) Anmeldenummer: 05002579.0
(22) Anmeldetag: 08.02.2005
(51) Int. Cl.: G06F 11/34

(54) **Verfahren zum Betreiben einer Datenträgervorrichtung mit Ablaufdiagnosespeicher**
Method for utilising a data memory medium having a trace memory
Méthode d'utilisation d'un support de mémoire de données ayant une mémoire de traçage

(30) Priorität: 17.02.2004 DE 102004007614
(43) Veröffentlichungstag der Anmeldung: 17.08.2005
(73) Patentinhaber: Giesecke & Devrient GmbH, 81677 München (DE)
(72) Erfinder: Stocker, Thomas, 81825 München (DE); Baldischweiler, Michael, 81825 München (DE)
(74) Vertreter: Klunker . Schmitt-Nilson . Hirsch

(56) Entgegenhaltungen:
- EP-A- 0 955 577
- DE-A1- 10 145 783
- DE-A1- 19 930 120
- GB-A- 2 281 986
- GB-A- 2 389 432

## Beschreibung

Die Erfindung betrifft Verfahren zum Betreiben eines tragbaren Datenträgers mit einem zum Ausführen in dem Datenträger eingerichteten Programmcode, der beim Ausführen aus einer vorbestimmten Sequenz von Befehlen besteht.

Bei vielen Einsatzgebieten von tragbaren Datenträgern ist eine hohe Zuverlässigkeit des tragbaren Datenträgers von großer Bedeutung. So kann beispielsweise eine Fehlfunktion bis hin zum Ausfall eines als bargeldloses Zahlungsmittel oder als Sicherheitsmodul für ein Mobiltelefon (z.B. SIM-Karte; USIM-Karte) ausgebildeten tragbaren Datenträgers zu erheblichen Unannehmlichkeiten für dessen Inhaber und zu Imageschäden für den Herausgeber führen.

Herkömmlicherweise werden tragbare Datenträger (z.B. SIM-Karten) in regelmäßigen Zeitabständen ausgetauscht, wobei die Zeitabstände so bemessen sind, dass voraussichtlich so gut wie keine Fehlfunktionen auftreten.

Nach einem firmeninternen Stand der Technik ist es bekannt, bei einem Datenträger (z.B. SIM-Karte), der über ein Netzwerk mit einer zentralen Einrichtung zumindest zeitweise in Verbindung steht, dass der zentralen Einrichtung über das Netzwerk Informationen über den Funktionszustand des Datenträgers übermittelt werden. Auf Grundlage des übermittelten Funktionszustandes kann die zentrale Einrichtung feststellen, ob ein Austausch des Datenträgers erforderlich ist. Hierdurch kann für jeden einzelnen Datenträger individuell und unverzüglich beim Auftreten von Fehlern über einen ggf. erforderlichen Austausch informiert oder entschieden werden ("over the air", z.B. per SMS).

Die Gründe, die einen Ausfall oder eine sonstige Fehlfunktion eines Datenträgers hervorrufen, können vielfältig sein. Dabei kommt es vor, dass durch systematische Fehler wie z.B. ein fehlerhaftes oder ungünstiges Design der Hardware und/oder der Software (z.B. Betriebssystem) des Datenträgers Fehlfunktionen gehäuft auftreten. Alterungsprozesse können eine andere Ursache für Fehlfunktionen sein. Zusätzlich können missbräuchliche Angriffe auf den Datenträger zu Fehlfunktionen führen. Für den Herausgeber wäre es wünschenswert, solche Fehlfunktionen des Datenträgers und ihre Ursachen zu erkennen, damit sie bei künftigen Datenträgern behoben werden können, z.B. durch ein verbessertes generelles Design oder durch verbesserte Abwehrmaßnahmen gegen Angriffe. Eine nachträgliche Analyse eines fehlerhaft funktionierenden oder ausgefallenen Datenträgers ist auf Grund der zunehmenden Komplexität heutiger Betriebssysteme in Datenträgern in der Regel unmöglich.

Dokument D1 = GB-A-2 389 432 wird als nächstliegenden Stand der Technik betrachtet, da D1 ein Verfahren offenbart, das ein Datenträger mit einem kontinuierlichen Pufferspeicher sowie ein Ablaufdiagnosespeicher beträgt, die dergestalt zusammen fungieren, dass in Abhängigkeit einer erkannten Fehlfunktion des Datenträgers vorbestimmte LOG-Information in Bezug auf die Ausführung des Programmcodes in einen Tracespeicher abgespeichert werden.

Der Erfindung liegt die Aufgabe zu Grunde, ein Verfahren zum Betreiben eines tragbaren Datenträgers zu schaffen, das es ermöglicht, Fehlfunktionen des tragbaren Datenträgers nachzuvollziehen. Zudem soll ein entsprechender tragbarer Datenträger geschaffen werden.

Die Aufgabe wird gelöst durch ein Verfahren nach dem unabhängigen Anspruch 1 bzw. einen Datenträger nach Anspruch 17. Vorteilhafte Ausgestaltungen der Erfindung sind in den abhängigen Ansprüchen angegeben.

Bei dem im unabhängigen Anspruch 1 angegebenen Verfahren wird ausgegangen von einem tragbaren Datenträger mit einem zum Ausführen in dem Datenträger eingerichteten Programmcode, der beim Ausführen aus einer vorbestimmten Sequenz von Befehlen besteht. Im zeitlichen Ablauf wird beim Ausführen des Programmcodes die Sequenz von Befehlen Befehl für Befehl abgearbeitet. Gemäß der Erfindung wird jeder aktuell ausgeführte Befehl der Sequenz in einen kontinuierlichen Pufferspeicher abgespeichert und dort so lange abgespeichert gehalten, dass stets eine vorbestimmte Anzahl von Befehlen vor oder bis zu dem aktuell ausgeführten Befehl oder eine vorbestimmte Teilsequenz der Sequenz von Befehlen vor oder bis zu dem aktuell ausgeführten Befehl in dem kontinuierlichen Pufferspeicher abgespeichert gehalten ist. In Abhängigkeit von einer von dem Datenträger erkannten Fehlfunktion des Datenträgers werden vorbestimmte LOG-Informationen in Bezug auf die Ausführung des Programmcodes in einen Ablaufdiagnosespeicher (LOG/Trace-Speicher) abgespeichert, wobei die LOG-Informationen den aktuallen Inhalt des kontinuierlichen Pufferspeichers aufweisen.

Der entsprechende Datenträger hat zumindest einen kontinuierlichen Pufferspeicher und einen oder mehrere Ablaufdiagnosespeicher. Wahlweise hat der Datenträger eine Fehlererkennungseinrichtung zum Erkennen der genannten Fehlfunktion. Zum Auslesen des Ablaufdiagnosespeichers kann der Datenträger Kontaktierungsmöglichkeiten für kontaktbehaftete und/oder für kontaktlose Kontaktierung haben.

Beim Auftreten einer Fehlfunktion werden häufig die Werte von bestimmten, für Fehlfunktionen anfälligen Daten innerhalb des Datenträgers beeinflusst oder verändert. Die geänderten Werte dieser Daten lassen häufig Rückschlüsse auf die Fehlfunktion zu. Werden daher beim Auftreten der Fehlfunktion die aktuellen Werte der anfälligen Daten als LOG-Informationen aufbewahrt und gleich oder später, bei Wiederaufhebung der Fehlfunktion im Ablaufdiagnosespeicher abgespeichert, so kann später aus dem Inhalt des Ablaufdiagnosespeichers ein Rückschluss auf Fehlfunktionen gezogen werden, die im Laufe der Zeit im Datenträger aufgetreten sind.

Daher ist gemäß Anspruch 1 ein Verfahren geschaffen, das es ermöglicht, Fehlfunktionen eines tragbaren Datenträgers nachzuvollziehen. Der Datenträger gemäß Anspruch 18 ist entsprechend dem Verfahren eingerichtet.

Der kontinuierliche Pufferspeicher ist wahlweise ein flüchtiger Speicher, z.B. ein RAM, kann aber je nach Ausführungsform auch ein nichtflüchtiger Speicher sein. Um Speicherplatz zu sparen werden wahlweise in dem kontinuierlichen Pufferspeicher alte Inhalte durch neue Inhalte überschrieben, mit der Vorgabe, dass die Inhalte gemäß Anspruch 1 lange genug aufbewahrt werden, bevor sie überschrieben werden. Bei Bedarf, z.B. falls die LOG-Informationen erst bei Aufhebung der Fehlfunktion in den Ablaufdiagnosespeicher übertragen werden, kann der kontinuierliche Pufferspeicher auch ein nichtflüchtiger Speicher sein. Der Ablaufdiagnosespeicher ist vorzugsweise ein nichtflüchtiger Speicher, z.B. ein EEPROM oder ein Flash-Speicher. Wahlweise weist ein Datenträger mehrere Ablaufdiagnosespeicher auf.

Der Programmcode in dem Datenträger kann ein Betriebssystem oder eine Anwendung sein. Die Anwendung kann insbesondere eine Authentisierungsfunktion sein, zum Authentisieren des Datenträgers gegenüber einem Hintergrundsystem. Beispielsweise kann die Anwendung eine Authentisierungsfunktion zur Authentisierung einer Teilnehmerkarte in einem Mobilfunksystem sein, wobei die Teilnehmerkarte eine entsprechende Teilnehmerkarte (z.B. SIM-Karte oder USIM-Karte) ist. Alternativ kann die Anwendung eine Authentisierungsfunktion für eine Zahlungsverkehr-Transaktion sein, wobei der Datenträger eine Zahlungsverkehrkarte (z.B. elektronische Geldbörse oder Kreditkarte oder Debitkarte) ist. Der Datenträger kann auch eine Multiapplikations-Karte sein, in der mehrere der genannten (Zahlungsverkehr; Mobiltelefon) und/oder weiterer Funktionalitäten implementiert sind.

Der Programmcode kann als nativer Code vorliegen, der zur Ausführung durch die CPU des Datenträgers geeignet ist. Alternativ kann der Programmcode als Zwischencode vorliegen, der zur Ausführung durch einen Interpreter (Befehls-Interpreter) vorgesehen ist. Insbesondere kann der Programmcode, wenn er als Zwischencode vorliegt, in Gestalt eines Java Byte-Code vorliegen, der zur Ausführung durch eine virtuelle Java-Card-Maschine (JCVM) vorgesehen ist, wobei der Datenträger eine Java Card mit einer virtuellen Java-Card-Maschine (JCVM) ist.

Vorzugsweise wird, als LOG-Informationen oder ein Teil davon, der aktuelle Inhalt des kontinuierlichen Pufferspeichers in den Ablaufdiagnosespeicher abgespeichert.

Vorzugsweise enthalten die LOG-Informationen eine Beschreibung der erkannten Fehlfunktion (bzw. die aufgetretene Fehlfunktion selbst).

Vorzugsweise werden der aktuelle Speicherinhalt des kontinuierlichen Pufferspeichers und ggf. weitere LOG-Informationen zusammen mit einer Beschreibung der Fehlfunktion, anlässlich der das Abspeichern in den Ablaufdiagnosespeicher veranlasst wurde, in dem Ablaufdiagnosespeicher abgespeichert, d.h. in einer Weise abgespeichert, dass nachvollziehbar ist, dass die Fehlfunktion und die abgespeicherten LOG-Informationen anlässlich der Fehlfunktion abgespeichert wurden und insofern zusammengehören. Auf diese Weise ist später nachvollziehbar, durch welche Fehlfunktion welche Veränderungen in dem Datenträger ausgelöst worden sind.

Wahlweise weisen die LOG-Informationen mindestens eine Zustandsinformation auf, insbesondere den Zustand eine Programmzählers (PC) und/oder eines Stack Pointers (SP) des Datenträgers.

Wahlweise weisen die LOG-Informationen den aktuellen Speicherwert mindestens eines weiteren Speicherbereichs, insbesondere eines Registers und/oder einer lokalen Variable für den Datenträger, auf.

Bei einem Datenträger mit einem Interpreter werden wahlweise als LOG-Informationen Informationen abgespeichert, die durch den Interpreter, z.B. die virtuelle Java-Card-Maschine, ohnehin direkt bereitgestellt werden, und die nur in den Ablaufdiagnosespeicher übernommen werden müssen, z.B. WTX-Sequenzen und/oder R-Blöcke.

Die Fehlfunktion, die das Abspeichern auslöst kann z.B. eine Ausnahme bei der Ausführung des Programmcodes sein, bei Java z.B. eine Exception. Alternativ kann die Fehlfunktion, die das Abspeichern auslöst, eine Spannungsunterbrechung oder Stromunterbrechung sein. Die Fehlfunktion, insbesondere Ausnahme oder Spannungsunterbrechung, kann z.B. durch den Datenträger selbst verursacht sein, durch eine Fehlbedienung von außen oder durch einen Angriff von außen auf den Datenträger. Fehlbedienung kann z.B. ein vorzeitiges Entfernen des Datenträgers aus einem Lesegerät sein, während der Datenträger und das Lesegerät in Kommunikationsverbindung standen, so dass eine Fehlfunktion auftritt (z.B. Spannungsunterbrechung oder Stromunterbrechung).

Wahlweise sind in dem Datenträger sicherheitsrelevante Informations-Codeteile (Daten und/oder Programmcode) implementiert, insbesondere ein geheimer Schlüssel und/oder eine geheime Identifikationsnummer und/oder eine Authentifizierungsanwendung zur Authentifizierung des Datenträgers unter Verwendung eines geheimen Schlüssels. Der geheime Schlüssel kann z.B. ein Authentisierungsschlüssel Ki für ein Authentisierungsverfahren sein, z.B. für die Authentisierung des Datenträgers gegenüber einem Hintergrundsystem bei einem Mobilfunksystem oder bei einer Zahlungsverkehrtransaktion. Die Identifikationsnummer kann z.B. eine PIN-Nummer (PIN = personal identification number) sein, durch die der Zugriff auf den Datenträger abgesichert ist. Das Authentisierungsverfahren kann z.B. ein Authentisierungsalgorithmus sein, z.B. für die Authentisierung des Datenträgers gegenüber einem Hintergrundsystem bei einem Mobilfunksystem oder bei einer Zahlungsverkehrtransaktion.

Vorzugsweise wird, falls die abzuspeichernde LOG-Information geheime Informations-Codeteile (Daten und/oder Programmcode) aufweist, ein Abspeichern der geheimen Informations-Codeteile im Ablaufdiagnosespeicher verhindert. Andernfalls bestünde die Gefahr, dass der Ablaufdiagnosespeicher unbefugt ausgelesen wird und aus dem ausgelesenen Speicherinhalt Rückschlüsse auf die geheimen Informations-Codeteile (insb. geheimen Informations-Daten, z.B. PIN, Authentisierungsschlüssel Ki) gezogen werden.

Weiter wird vorzugsweise anlässlich eines Auslesens des Ablaufdiagnosespeichers bewirkt, dass vorbestimmte Teile des in dem Datenträger implementierten Codes (insb. Daten und/oder Programmcode) (z.B. Daten, Anwendung etc.) unlesbar gemacht werden. Auf diese Weise wird verhindert, dass beim Auslesen des Ablaufdiagnosespeichers unbefugterweise auf Teile des Datenträgers zugegriffen wird, auf die der Zugriff verwehrt bleiben soll. Das unlesbar Machen von Code wird zweckmäßigerweise so durchgeführt, dass der Ablaufdiagnosespeicher auslesbar bleibt (ggf. unter Einsatz weiterer Sicherheitsmaßnahmen wie Authentisierung etc., vgl. weiter unten).

Zu den vorbestimmten Teilen, die anlässlich eines Auslesens des Ablaufdiagnosespeichers unlesbar gemacht werden, können beispielsweise die oben genannten geheimen Informations-Codeteile (PIN, Ki etc.) zählen, da diese geheimen Informations-Codeteile besonders schutzbedürftig sind.

Zu einem gewählten Zeitpunkt, beispielsweise, nachdem der Datenträger vollständig ausgefallen ist, wird der Ablaufdiagnosespeicher des Datenträgers mittels eines Lesegeräts ausgelesen, um die Lebensgeschichte des Datenträgers nachzuvollziehen.

Vorzugsweise wird das Auslesen nur nach einer erfolgreichen Authentisierung des Lesegeräts gegenüber dem Datenträger ermöglicht. Kann sich das Lesegerät gegenüber dem Datenträger nicht authentisieren, bleibt der Zugriff auf den Ablaufdiagnosespeicher verwehrt. Beispielsweise ist der Zugriff auf den Ablaufdiagnosespeicher durch eine PIN abgesichert und/oder die Authentisierung ist dadurch gegeben, dass das Auslesen des Ablaufdiagnosespeichers Secure Messaging erfordert (z.B. bei Java).

Gemäß einer bevorzugten Ausführungsform der Erfindung wird als kontinuierlicher Pufferspeicher ein für atomare Schreibvorgänge bereitstehender Pufferspeicher verwendet. Diese bevorzugte Ausführungsform hat den zusätzlichen Vorteil, dass der Pufferspeicher für atomare Schreibvorgänge ohnehin bereitsteht, so dass für den kontinuierlichen Pufferspeicher kein zusätzlicher Speicher vorgesehen werden muss.

Wahlweise werden in den kontinuierlichen Pufferspeicher zusätzlich Daten geschrieben, die zur Durchführung eines atomaren Schreibvorgangs vorgesehen sind.

Bei einem atomaren Schreibvorgang muss ein vorbestimmter Datensatz vollständig von einem ersten Speicher in einen zweiten Speicher übertragen werden. Hierzu wird der Datensatz zuerst in einem Zwischenpuffer-Schritt vom ersten Speicher in einen Pufferspeicher geschrieben (Zwischenpuffern). Nachdem das Schreiben in den Pufferspeicher vollständig abgeschlossen ist, wird ein Status-Flag des Pufferspeichers von ungültig auf gültig gesetzt. Nur wenn das Status-Flag auf gültig gesetzt ist, wird der Datensatz in einem Schritt des sicheren Schreibens aus dem Pufferspeicher in den zweiten Speicher abgespeichert (übertragen) (sicherer Schreibvorgang). Sobald der Datensatz vollständig in den zweiten Speicher abgespeichert worden ist, wird das Status-Flag wieder auf ungültig gesetzt, um zu signalisieren, dass der Inhalt des Pufferspeichers nachfolgend nicht mehr verwendet werden soll.

Tritt während des Abspeicherns vom Pufferspeicher in den zweiten Speicher eine Fehlfunktion auf, z.B. eine Spannungs- oder Stromunterbrechung, wird der Datensatz nur unvollständig in den zweiten Speicher übertragen. Das Status-Flag des Pufferspeichers bleibt auf gültig. Bei einer Wiederinbetriebnahme des Datenträgers, wenn die Fehlfunktion wieder behoben ist, ist im zweiten Speicher ein unvollständiger Datensatz enthalten, was unerwünscht ist. Andererseits ist das Status-Flag immer noch gültig. Daher wird bei der Behebung der Fehlfunktion der Inhalt des Zwischenspeichers automatisch in den zweiten Speicher abgespeichert (übertragen), d.h. der unvollständige Datensatz im zweiten Speicher wird aus dem Pufferspeicher heraus restauriert. Hierdurch ist sichergestellt, dass im zweiten Speicher kein unvollständiger Datensatz verbleiben kann.

Das Abspeichern der LOG-Informationen in den Ablaufdiagnosespeicher wird gemäß einer Ausführungsform anlässlich des Auftretens der Fehlfunktion durchgeführt. Anlässlich des Auftretens der Fehlfunktion werden also z.B. der angesammelte Inhalt des kontinuierlichen Pufferspeichers und die Inhalte vorbestimmter Register in den Ablaufdiagnosespeicher abgespeichert (übertragen).

Gemäß einer anderen Ausführungsform wird das Abspeichern der LOG-Informationen in den Ablaufdiagnosespeicher anlässlich einer Aufhebung der Fehlfunktion, nachdem die Fehlfunktion aufgetreten ist, durchgeführt. Bei Auftreten der Fehlfunktion werden die LOG-Informationen vorzugsweise bereits zum Abspeichern in den Ablaufdiagnosespeicher bereitgestellt. Bei dieser Ausführungsform ist insbesondere i.d.R. ein nichtflüchtiger kontinuierlicher Pufferspeicher erforderlich.

Anlässlich, vorzugsweise bei Aufhebung der Fehlfunktion werden bei Bedarf die Daten aus dem Pufferspeicher zur Restaurierung eines anderen Speicherbereichs verwendet, nach Art eines atomaren Schreibvorgangs, während LOG-Informationen, d.h. z.B. die im Pufferspeicher und wahlweise in anderen Speicherbereichen wie z.B. Registern enthaltenen LOG-Informationen in den Ablaufdiagnosespeicher übertragen werden.

Im folgenden wird die Erfindung anhand von Ausführungsbeispielen und unter Bezugnahme auf die Zeichnung näher erläutert, in der zeigen:
- Fig. 1: ein schematisches Diagramm zur Veranschaulichung eines Verfahrens gemäß einer ersten Ausführungsform der Erfindung;
- Fig. 2: ein schematisches Diagramm zur Veranschaulichung eines Verfahrens gemäß einer zweiten Ausführungsform der Erfindung;
- Fig. 3: ein schematisches Diagramm zur Veranschaulichung eines Verfahrens gemäß einer dritten Ausführungsform der Erfindung, wobei als kontinuierlicher Pufferspeicher ein Speicher verwendet wird, der zugleich ein Pufferspeicher für atomare Schreibvorgänge ist.

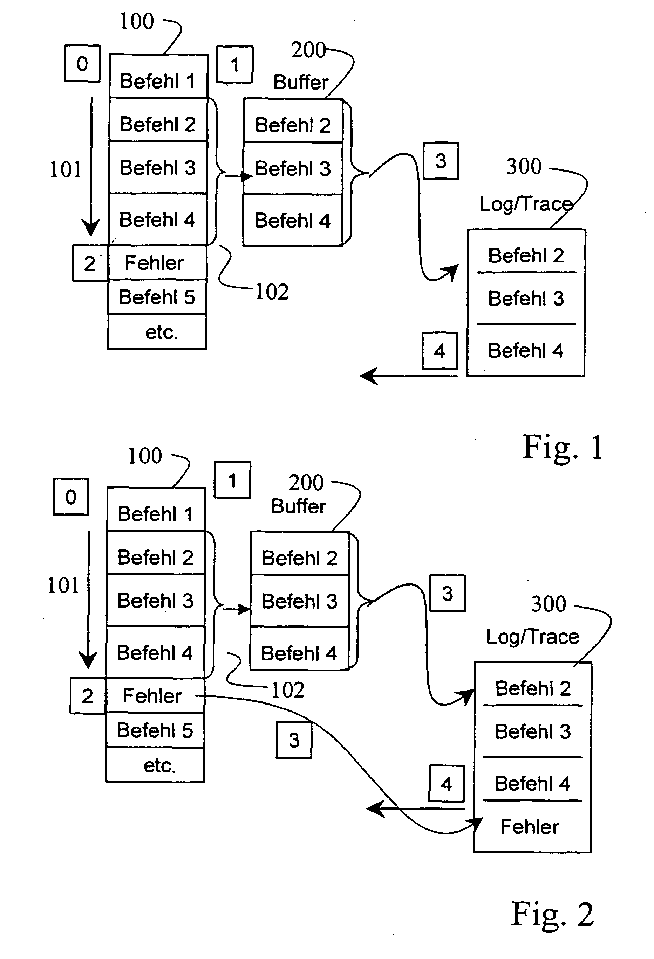

Fig. 1 zeigt ein schematisches Diagramm zur Veranschaulichung eines Verfahrens gemäß einer ersten Ausführungsform der Erfindung. Fig. 1 zeigt genauer eine Sequenz 100 von Befehlen, die in einem Schritt 0 nacheinander in Reihenfolge des Pfeils 101 ablaufen (Befehl1, Befehl2, ...). Fig. 1 zeigt weiter einen flüchtigen kontinuierlichen Pufferspeicher 200 und, als Ablaufdiagnosespeicher, einen nichtflüchtigen LOG/Trace-Speicher 300. Der jeweils letzte abgearbeitete Befehl, in Fig. 1 der Befehl Befehl4, wird in einem Schritt 1 in den kontinuierlichen Pufferspeicher 200 übertragen, wobei jeweils die letzten drei abgearbeiteten Befehle, in Fig. 1 die Befehle "Befehl2", "Befehl3" und Befehl4", in dem kontinuierlichen Pufferspeicher 200 abgespeichert gehalten werden, wie durch die Klammer 102 angedeutet ist, die aber nicht bedeutet, dass die drei Befehle auf einmal in den Pufferspeicher 200 übertragen werden müssen. Sobald der nächste Befehl Befehl5 abgearbeitet wäre, würde Befehl5 im kontinuierlichen Pufferspeicher 200 abgespeichert und dafür Befehl2 aus dem kontinuierlichen Pufferspeicher 200 entfernt (in Fig. 1 nicht dargestellt). Bei oder nach der Abarbeitung des Befehls Befehl4 tritt in Schritt 2 eine Fehlfunktion auf, nämlich in Fig. 1 eine Java Exception. Anlässlich des Auftretens der Fehlfunktion wird in einem Schritt 3 der aktuelle Inhalt des Pufferspeichers 200 in den LOG/Trace-Speicher 300 übertragen. Der Verfahrensablauf mit den Schritten 1, 2, und 3 kann mehrmals nacheinander auftreten, so dass der LOG/Trace-Speicher schließlich mehrere Einträge wie den in Fig. 1 dargestellten enthält. Zu einem späteren Zeitpunkt wird in einem Schritt 4 der LOG/Trace-Speicher mit einem Lesegerät (nicht gezeigt in Fig. 1) ausgelesen, nachdem das Lesegerät sich erfolgreich gegenüber dem Datenträger authentisiert hat. Die ausgelesenen drei Befehle "Befehl2", "Befehl3" und "Befehl4" erlauben es, die Abläufe in dem Datenträger unmittelbar vor dem Auftreten der Fehlfunktion nachzuvollziehen. Aus eventuellen Mustern, nach denen die drei Befehle angeordnet oder gestaltet sind, lassen sich Rückschlüsse auf die Ursache der Fehlfunktion ziehen.

Fig. 2 veranschaulicht einen ähnlichen Verfahrensablauf wie Fig. 1, mit dem Unterschied, dass beim Auftreten einer Fehlfunktion in Schritt 3 nicht nur der aktuelle Inhalt des kontinuierlichen Pufferspeichers 200, sondern zusätzlich eine Beschreibung der aufgetretenen Fehlfunktion (z.B. Art der Fehlfunktion) in den LOG/Trace-Speicher übertragen wird. Die Beschreibung der Fehlfunktion lautet z.B., im Anschluss an das Beispiel aus Fig. 1, "Exception". Die Beschreibung der Fehlfunktion selbst liefert zusätzliche Information, die zusammen mit den abgespeicherten letzten drei abgearbeiteten Befehlen verwendet werden kann, um die Ursache der Fehlfunktion zu ergründen.

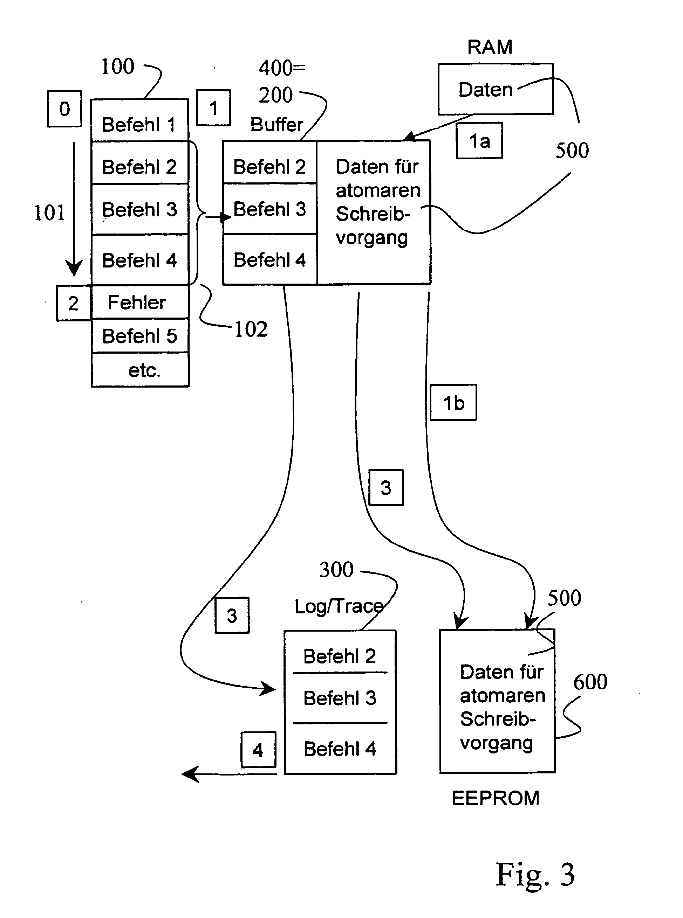

Fig. 3 zeigt ein schematisches Diagramm zur Veranschaulichung eines Verfahrens gemäß einer dritten Ausführungsform der Erfindung, wobei als kontinuierlicher Pufferspeicher 200 ein Speicher 400 verwendet wird, der zugleich ein nichtflüchtiger Pufferspeicher 400 für atomare Schreibvorgänge ist. In einem Schritt 1 werden, analog wie in den Beispielen aus Fig. 1 und Fig. 2, Befehle 100 als LOG-Informationen in einem kontinuierlichen Pufferspeicher 200, 400 gesammelt. Gleichzeitig werden in Schritt 1a in dem Pufferspeicher 200, 400 Daten für einen atomaren Schreibvorgang zwischengepuffert. Sobald das Schreiben der Daten in den Pufferspeicher 200, 400 vollendet ist, wird ein Status-Flag des Pufferspeichers von ungültig auf gültig gesetzt. In einem nachfolgenden Schritt 1b wird ein sicherer Schreibvorgang begonnen und teilweise durchgeführt, bei dem die Daten 500 in einen EEPROM 600 übertragen werden. Während des sicheren Schreibens werden nach wie vor, Schritt 1, Befehle als LOG-Informationen im Pufferspeicher 200, 400 angesammelt. Bevor das sichere Schreiben gemäß Schritt 1b vom Pufferspeicher 200, 400 in den EEPROM 600 vollendet ist, tritt in Schritt 2 eine Fehlfunktion auf. Da das sichere Schreiben nicht beendet worden ist, bleibt das Status-Flag des Pufferspeichers 200, 400 auf gültig. Sobald die Fehlfunktion wieder behoben ist, werden in Schritt 3 die LOG-Informationen aus dem Pufferspeicher 200, 400 in den Ablaufdiagnosespeicher (LOG/Trace-Speicher) 300 übertragen. Weiter wird das Status-Flag des Pufferspeichers 200, 400 überprüft. Da das Status-Flag gültig ist, werden die Daten aus dem Pufferspeicher 200, 400 in den EEPROM 600 übertragen (abgespeichert), wodurch der zuvor unvollständig bespeicherte EEPROM 600 restauriert wird.

Ausführungsformen, bei denen ein nichtflüchtiger kontinuierlicher Pufferspeicher verwendet wird, und insbesondere die oben angeführte dritte Ausführungsform gemäß Fig. 3, bei der ein Pufferspeicher für atomare Schreibvorgänge verwendet wird, sind vor allem für Fehlfunktionen geeignet, bei denen eine Stromunterbrechung (Spannungsunterbrechung) zwischen einem Datenträger und einem mit dem Datenträger zusammenwirkenden Lesegerät auftritt. Beim Auftreten der Stromunterbrechung sind die zuletzt durchgeführten Befehle im nichtflüchtigen Pufferspeicher gepuffert und gehen auch durch die Stromunterbrechung nicht verloren. Sobald die Stromunterbrechung aufgehoben wird, wird der Inhalt des Pufferspeichers in den Ablaufdiagnosespeicher übertragen, aus dem der Inhalt später ausgelesen werden kann.

## Patentansprüche

1. Verfahren zum Betreiben eines tragbaren Datenträgers mit einem zum Ausführen in dem Datenträger eingerichteten Programmcode, der beim Ausführen aus einer vorbestimmten Sequenz (100) von Befehlen besteht, wobei
- jeder aktuell ausgeführte Befehl der Sequenz in einen kontinuierlichen Pufferspeicher (200) abgespeichert wird und so lange abgespeichert gehalten wird, dass stets eine vorbestimmte Anzahl von Befehlen vor oder bis zu dem aktuell ausgeführten Befehl oder eine vorbestimmte Teilsequenz der Sequenz von Befehlen vor oder bis zu dem aktuell ausgeführten Befehl in dem kontinuierlichen Pufferspeicher (200) abgespeichert gehalten ist,
- in Abhängigkeit von einer von dem Datenträger erkannten Fehlfunktion (2) des Datenträgers vorbestimmte LOG-Informationen in Bezug auf die Ausführung des Programmcodes in einen Ablaufdiagnosespeicher (LOG/Trace-Speicher 300) abgespeichert werden, wobei die LOG-Informationen den aktuellen Inhalt des kontinuierlichen Pufferspeichers (200) aufweisen.

2. Verfahren nach Anspruch 1, wobei die LOG-Informationen die erkannte Fehlfunktion (2) aufweisen.

3. Verfahren nach Anspruch 1 oder 2, wobei die LOG-Informationen mindestens eine Zustandsinformation aufweisen, insbesondere den Zustand eine Programmzählers (PC) und/oder eines Stack Pointers (SP).

4. Verfahren nach einem der Ansprüche 1 bis 3, wobei die LOG-Informationen den aktuellen Speicherwert mindestens eines weiteren Speicherbereichs, insbesondere eines Registers und/oder einer lokalen Variable, aufweisen.

5. Verfahren nach einem der Ansprüche 1 bis 4, wobei die Fehlfunktion eine Ausnahme bei der Ausführung des Programmcodes aufweist.

6. Verfahren nach einem der Ansprüche 1 bis 5, wobei die Fehlfunktion eine Spannungsunterbrechung oder Stromunterbrechung aufweist.

7. Verfahren nach einem der Ansprüche 1 bis 6, wobei das Abspeichern der LOG-Informationen in den Ablaufdiagnosespeicher (300) anlässlich des Auftretens der Fehlfunktion durchgeführt wird.

8. Verfahren nach einem der Ansprüche 1 bis 6, wobei das Abspeichern der LOG-Informationen in den Ablaufdiagnosespeicher (300) anlässlich einer Aufhebung der Fehlfunktion, nachdem die Fehlfunktion aufgetreten ist, durchgeführt wird.

9. Verfahren nach einem der Ansprüche 1 bis 8, wobei als kontinuierlicher Pufferspeicher (200) ein für atomare Schreibvorgänge bereitstehender Pufferspeicher (400) verwendet wird.

10. Verfahren nach einem der Ansprüche 1 bis 9, wobei in dem Datenträger sicherheitsrelevante Informations-Codeteile implementiert sind, insbesondere ein geheimer Schlüssel und/oder eine geheime Identifikationsnummer und/oder eine Authentifizierungsanwendung zur Authentifizierung des Datenträgers unter Verwendung eines geheimen Schlüssels.

11. Verfahren nach Anspruch 10, wobei, falls die abzuspeichernde LOG-Information geheime Informations-Codeteile aufweist, ein Abspeichern der geheimen Informations-Codeteile oder vorbestimmter Teile davon in den Ablaufdiagnosespeicher verhindert wird.

12. Verfahren nach einem der Ansprüche 1 bis 11, wobei anlässlich eines Auslesens des Ablaufdiagnosespeichers bewirkt wird, dass vorbestimmte Teile des in dem Datenträger implementierten Programmcodes unlesbar gemacht werden.

13. Verfahren nach den Ansprüche 12 und 10 in Verbindung, wobei die unlesbar gemachten vorbestimmten Teile geheime Informations-Codeteile aufweisen.

14. Verfahren nach einem der Ansprüche 1 bis 13, wobei weiter die in dem Ablaufdiagnosespeicher (300) abgespeicherten LOG-Informationen mittels eines Lesegeräts ausgelesen werden, wobei das Auslesen nur nach einer erfolgreichen Authentisierung des Lesegeräts gegenüber dem Datenträger ermöglicht wird.

15. Verfahren nach einem der Ansprüche 1 bis 14, wobei der Datenträger eine Teilnehmerkarte zum Betreiben eines mobilen Endgeräts in einem Mobilfunksystem ist.

16. Verfahren nach einem der Ansprüche 1 bis 15, wobei der Datenträger eine Zahlungsverkehrkarte ist, insbesondere mit der Funktion einer elektronischen Geldbörse und/oder einer Kreditkarte und/oder einer Debitkarte.

17. Datenträger mit einer CPU und mit einem zum Ausführen in dem Datenträger eingerichteten Programmcode, der beim Ausführen aus einer vorbestimmten Sequenz (100) von Befehlen besteht, und mit einem darin implementierten Verfahren nach einem der Ansprüche 1 bis 16, wobei der Datenträger zumindest aufweist:
- einen kontinuierlichen Pufferspeicher (200),
- mindestens einen Ablaufdiagnosespeicher (LOG/Trace-Speicher 300), und
- eine Fehlererkennungseinrichtung zum Erkennen der Fehlfunktion.

## Claims

1. A method for operating a portable data carrier with a program code adapted for execution in the data carrier and comprising a predetermined sequence (100) of instructions upon execution, wherein
- each currently executed instruction of the sequence is stored in a continuous buffer memory (200) and held stored so long that a predetermined number of instructions before or up to the currently executed instruction or a predetermined partial sequence of the sequence of instructions before or up to the currently executed instruction is always held stored in the continuous buffer memory (200),
- in dependence on a malfunction (2) of the data carrier detected by the data carrier, predetermined log information with respect to the execution of the program code is stored in a log/trace memory (300), the log information having the current content of the continuous buffer memory (200).

2. The method according to claim 1, wherein the log information has the detected malfunction (2).

3. The method according to claim 1 or 2, wherein the log information has at least one piece of status information, in particular the status of a program counter (PC) and/or a stack pointer (SP).

4. The method according to any of claims 1 to 3, wherein the log information has the current memory value of at least one further memory area, in particular a register and/or a local variable.

5. The method according to any of claims 1 to 4, wherein the malfunction has an exception during execution of the program code.

6. The method according to any of claims 1 to 5, wherein the malfunction has a voltage interruption or current interruption.

7. The method according to any of claims 1 to 6, wherein the storage of the log information in the log/trace memory (300) is carried out on the occasion of the occurrence of the malfunction.

8. The method according to any of claims 1 to 6, wherein the storage of the log information in the log/trace memory (300) is carried out on the occasion of an elimination of the malfunction after the malfunction has occurred.

9. The method according to any of claims 1 to 8, wherein the continuous buffer memory (200) used is a buffer memory (400) provided by for atomic write procedures.

10. The method according to any of claims 1 to 9, wherein the data carrier has implemented therein security-relevant information code portions, in particular a secret key and/or a secret identification number and/or an authentication application for authenticating the data carrier using a secret key.

11. The method according to claim 10, wherein if the log information to be stored has secret information code portions, a storage of the secret information code portions or of predetermined parts thereof in the log/trace memory is prevented.

12. The method according to any of claims 1 to 11, wherein on the occasion of a readout of the log/trace memory it is caused that predetermined portions of the program code implemented in the data carrier are rendered unreadable.

13. The method according to claims 12 and 10 in combination, wherein the predetermined portions rendered unreadable have secret information code portions.

14. The method according to any of claims 1 to 13, wherein further the log information stored in the log/trace memory (300) is read out by means of a reading device, the readout being permitted only after a successful authentication of the reading device with respect to the data carrier.

15. The method according to any of claims 1 to 14, wherein the data carrier is a subscriber card for operating a mobile terminal in a mobile communication system.

16. The method according to any of claims 1 to 15, wherein the data carrier is a payment transaction card, in particular with the function of an electronic purse and/or a credit card and/or a debit card.

17. A data carrier having a CPU and having a program code adapted for execution in the data carrier and comprising a predetermined sequence (100) of instructions upon execution, and having a method according to any of claims 1 to 16 implemented therein, wherein the data carrier includes at least:
- a continuous buffer memory (200),
- at least one log/trace memory (300), and
- an error detection device for detecting the malfunction.

## Revendications

1. Procédé destiné au fonctionnement d'un support de données portable comportant un code de programme installé pour l'exécution dans le support de données, ce code de programme étant, lors de l'exécution, constitué d'une séquence (100) d'ordres prédéterminée,
- chaque ordre de la séquence actuellement exécuté étant mémorisé dans une mémoire tampon continue (200) et gardé en mémoire pendant un laps de temps correspondant à ce qu'un nombre prédéterminé d'ordres avant ou jusqu'à l'ordre actuellement exécuté ou bien une partie de séquence prédéterminée de la séquence d'ordres avant ou jusqu'à l'ordre actuellement exécuté est toujours gardé(e) en mémoire dans la mémoire tampon continue (200),
- des informations LOG prédéterminées concernant l'exécution du code de programme étant mémorisées dans une mémoire de diagnostic de déroulement (LOG/Mémoire Trace 300) en fonction d'un dysfonctionnement (2) du support de données reconnu par le support de données, les informations LOG présentant le contenu actuel de la mémoire tampon continue (200).

2. Procédé selon la revendication 1, les informations LOG présentant le dysfonctionnement (2) reconnu.

3. Procédé selon les revendications 1 ou 2, les informations LOG présentant au moins une information relative à l'état, notamment l'état d'un compteur de programme (CP) et / ou d'un Stack Pointer (SP).

4. Procédé selon l'une des revendications 1 à 3, les informations LOG présentant la valeur mémorisée actuelle d'au moins une autre zone de mémoire, notamment d'un registre et / ou d'une variable locale.

5. Procédé selon l'une des revendications 1 à 4, le dysfonctionnement présentant une exception dans l'exécution du code de programme.

6. Procédé selon l'une des revendications 1 à 5, le dysfonctionnement présentant une interruption de tension ou de courant.

7. Procédé selon l'une des revendications 1 à 6, la mémorisation des informations LOG dans la mémoire de diagnostic de déroulement (300) étant effectuée à l'occasion de la survenance du dysfonctionnement.

8. Procédé selon l'une des revendications 1 à 6, la mémorisation des informations LOG dans la mémoire de diagnostic de déroulement (300) étant effectuée à l'occasion de la suppression du dysfonctionnement après que le dysfonctionnement est survenu.

9. Procédé selon l'une des revendications 1 à 8, une mémoire tampon disponible pour les processus d'écriture atomiques étant utilisée en tant que mémoire tampon continue (200).

10. Procédé selon l'une des revendications 1 à 9, des parties de codes d'informations importantes pour la sécurité étant implémentées dans le support de données, notamment une clé secrète et / ou un numéro secret d'identification et / ou une application d'authentification pour l'authentification du support de données, une clé secrète étant utilisée en même temps.

11. Procédé selon la revendication 10, une mémorisation des parties secrètes de codes d'informations ou de parties prédéterminées de ces dernières dans la mémoire de diagnostic de déroulement étant empêchée si l'information LOG à mémoriser présente des parties secrètes de codes d'informations.

12. Procédé selon l'une des revendications 1 à 11, des parties prédéterminées du code de programme implémenté dans le support de données étant rendues illisibles en cas de lecture de données dans la mémoire de diagnostic de déroulement.

13. Procédé selon les revendications 12 et 10 en relation, les parties prédéterminées rendues illisibles présentant des parties secrètes du code d'informations.

14. Procédé selon l'une des revendications 1 à 13, les informations LOG mémorisées dans la mémoire de diagnostic de déroulement (300) continuant à être lues au moyen d'un appareil de lecture, cette lecture n'étant rendue possible qu'après une authentification valide de l'appareil de lecture vis-à-vis du support de données.

15. Procédé selon l'une des revendications 1 à 14, le support de données étant une carte d'abonné au fonctionnement d'un terminal mobile à l'intérieur d'un système de radiocommunication mobile.

16. Procédé selon l'une des revendications 1 à 14, le support de données étant une carte de paiement équipée notamment de la fonction d'une carte de bourse électronique et / ou d'une carte de crédit et / ou d'une carte de débit.

17. Supports de données comprenant une UCT et un code de programme installé pour l'exécution dans le support de données, ce code de programme étant, lors de l'exécution, constitué d'une séquence (100) d'ordres prédéterminée, et un procédé y étant implémenté selon l'une des revendications 1 à 16, le support de données présentant au moins :
- une mémoire tampon continue (200),
- au moins une mémoire de diagnostic de déroulement (LOG/Mémoire Trace 300), et
- un dispositif de détection des erreurs destiné à reconnaître le dysfonctionnement.
